# EUROPÄISCHE PATENTANMELDUNG

(11) **EP 4 474 084 A1**
(43) Veröffentlichungstag der Anmeldung: **11.12.2024**
(21) Anmeldenummer: 23177687.3
(22) Anmeldetag: 06.06.2023
(51) Int. Cl.: B23B 27/14, B23B 27/20, B28D 1/16

(54) **DREHWERKZEUG MIT EINEM SCHNEIDELEMENT FÜR EINE DREHMASCHINE DER ZERSPANTECHNIK SOWIE DREHMASCHINE UND VERWENDUNG EINES DREHWERKZEUGES**

(71) Anmelder: Roland Mandler GmbH & Co. KG, 35452 Heuchelheim (DE)
(72) Erfinder: Mandler, Roland, 35452 Heuchelheim (DE)
(74) Vertreter: Knefel, Cordula

(57) **Zusammenfassung**

Die Erfindung betrifft ein Drehwerkzeug mit einem Schneidelement für eine Drehmaschine der Zerspantechnik, wobei das Schneidelement eine Werkzeugschneide aufweist,
- wobei die Werkzeugschneide des Schneidelements in Draufsicht eine Krümmung aufweist,
- bei dem die Werkzeugschneide eine Werkzeugachse (A) des Schneidelements in senkrechtem Winkel schneidet,
- bei dem das Schneidelement einen Öffnungswinkel (W) bezogen auf einen Mittelpunkt aufweist,
- wobei das Schneidelement eine Asymmetrie derart aufweist, dass die Werkzeugachse (A) den Öffnungswinkel (W) außermittig schneidet,
und bei dem in Draufsicht auf das Schneidelement die Krümmung der Werkzeugschneide eine stetige Radienänderung aufweist.

## Beschreibung

Die Erfindung betrifft ein Drehwerkzeug mit einem Schneidelement für eine Drehmaschine der Zerspantechnik sowie eine Drehmaschine und Verwendung eines Drehwerkzeuges.

Zur Durchführung von Zerspanungsverfahren mit geometrisch bestimmten Schneiden sind Drehverfahren mit Drehmaschinen bekannt. Durch Rotation eines Werkstücks um eine Rotationsachse, wird dessen Oberfläche an einer Werkzeugschneide eines Schneidelements vorbeigeführt und der Span abgehoben.

Die weiteren Bewegungen zur Erzeugung des Schnitts, sind meist deutlich langsamer und kürzer und werden meist durch Freiheitsgrade des Drehwerkzeugs umgesetzt. Eine Form des Drehens ist das so genannte Quer-Plandrehen. Beim Quer-Plandrehen bewegt sich die Werkzeugschneide quer zur Drehachse. Es wird in der Praxis auch kurz als Plandrehen bezeichnet. Es resultiert im Drehergebnis eine plane Stirnfläche am Werkstück. Eine verwandte Sonderform des Quer-Plandrehens kommt bei der Herstellung optischer Linsenflächen zum Einsatz.

Ein derartiges Verfahren wird beispielsweise in der DE 10 2011 053 772 B3 beschrieben. Hier wird eine Stirnseite eines Linsenrohlings von außen nach innen zur Rotationsachse mit der Werkzeugschneide abgefahren. Es resultiert durch die Rotation des Werkstücks ein spiralförmiger Arbeitspfad, den die Werkzeugschneide auf dem Werkstück zurücklegt. Die Querbewegung der Werkzeugschneide wird zusätzlich durch eine Längsbewegung parallel zur Rotationsachse überlagert. Im einfachsten Fall dient dies der Herstellung einer sphärischen konvexen oder konkaven Oberfläche. Es lassen sich auf gleiche Art aber auch asphärische rotationssymmetrische Flächen oder Freiformflächen erzeugen.

Höhere Anforderungen an die Längsbewegung der Werkzeugschneide bestehen, wenn Freiformflächen mit Erhebungen und Senken auf dem Oberflächenumfang erzeugt werden oder aber ein prismatisches Gefälle auf der Oberfläche zu erzeugen ist. Die Längsbewegung ist dann an den Drehwinkel des Linsenrohlings gekoppelt und muss bei jeder Umdrehung vor und zurück erfolgen. Dies gelingt beispielsweise mit schnellen Servomotoren wie Fast-Tools, Tauchspulen und Piezo-Aktuatoren.

Als Drehwerkzeuge kommen insbesondere Schneidplatten oder Wendeschneidplatten zum Einsatz, wie sie beispielsweise in AT 305 726 B oder EP 2 813 305 B1 angegeben sind. Diese zum Stand der Technik gehörenden Lösungen weisen den Nachteil auf, dass sie eine langsame Herstellgeschwindigkeit beim Durchführen des Drehverfahrens bedingt durch Werkzeugradien von circa 2 mm und der damit verbunden hohen Anzahl an Umdrehungen zum Überfahren der gesamten Fläche aufweisen.

Die Rotationsgeschwindigkeit lässt sich nämlich nicht nach Belieben erhöhen. Entsprechend ist die Fertigungsstückzahl der Drehmaschine gering. Vor allem bei der Brillenglasfertigung mit hohem Fertigungsvolumen resultiert ein Brillenglaspreis, den es aus betriebswirtschaftlichen Gründen zu reduzieren gilt.

Mit einer kreisrunden Schneidplatte mit einem Durchmesser von 8 mm, wie sie beispielsweise von WO 02/076660 A1 angegeben ist, lassen sich Prismenwinkel und Gradienten auf einer zu drehenden Oberfläche nur sehr beschränkt erzeugen, weil das Werkzeug schlichtweg zu groß ist, um derartige Strukturen herzustellen. Damit ist es ungeeignet für die Drehbearbeitung von Brillengläsern.

Weiterhin gehört zum Stand der Technik (EP 3 970 888 A2) ein Drehwerkzeug mit einem Schneidelement, bei dem das Schneidelement in Draufsicht eine Krümmung aufweist. Die Krümmung weist wiederum einen konstanten Radius ausgehend von einem Mittelpunkt auf. Das Schneidelement weist üblicherweise eine Diamantoberfläche, beispielsweise aus synthetischen Material auf, da zum Bearbeiten von Kunststoffen das Werkzeug eine entsprechende Standzeit aufweisen muss. Dieses Material ist relativ teuer. Dieses zum Stand der Technik gehörende Schneidelement weist den Nachteil auf, dass es relativ schnell verschleißt, dadurch, dass das Schneidelement bei der zerspanenden Bearbeitung mit der zu bearbeitenden Oberfläche lediglich mit einem kleinen Bereich des Bearbeitungsbogens in Berührung kommt und sich hierdurch auch partiell schnell abnutzt.

Das der Erfindung zugrunde liegende technische Problem besteht darin, ein Drehwerkzeug mit einem Schneidelement anzugeben, welches eine höhere Standzeit aufweist und sich nicht so schnell abnutzt. Darüber hinaus soll eine Drehmaschine angeben werden, die weniger Ausfallzeiten aufweist, die durch den Austausch der Schneidelemente anfallen. Weiterhin soll eine vorteilhafte Verwendung des Drehwerkzeuges angegeben werden.

Dieses technische Problem wird durch ein Drehwerkzeug mit den Merkmalen des Anspruches 1 und durch eine Drehmaschine mit den Merkmalen gemäß Anspruch 15 und durch eine Verwendung eines Drehwerkzeuges gemäß Anspruch 16 gelöst.

Das erfindungsgemäße Drehwerkzeug mit einem Schneidelement für eine Drehmaschine der Zerspantechnik, wobei das Schneidelement eine Werkzeugschneide aufweist,
- wobei die Werkzeugschneide des Schneidelements in Draufsicht eine Krümmung aufweist,
- bei dem die Werkzeugschneide eine Werkzeugachse des Schneidelements in senkrechtem Winkel schneidet,
- bei dem das Schneidelement einen Öffnungswinkel bezogen auf einen Mittelpunkt aufweist,
- wobei das Schneidelement eine Asymmetrie derart aufweist, dass die Werkzeugachse den Öffnungswinkel außermittig schneidet,
zeichnet sich dadurch aus, dass in Draufsicht auf das Schneidelement die Krümmung der Werkzeugschneide eine stetige Radienänderung aufweist.

Der Vorteil des erfindungsgemäßen Drehwerkzeuges liegt darin, dass durch die Krümmung der Werkzeugschneide des Schneidelements mit einer stetigen Radienänderung das Schneidelement nicht mehr nur mit einem Punkt - in Draufsicht auf das Schneidelement gesehen - an dem Werkstück anliegt, sondern dass durch die Veränderung des Radius das Schneidelement ein deutlich größerer Bogenbereich im Einsatz ist. Hierdurch erhält man einen geringeren Verschleiß anstatt einer stark punktuellen Belastung, wie es beim Stand der Technik der Fall ist. Die Bearbeitungsfläche des Schneidelements wird durch die stetige Radienänderung grö-βer.

Die stetige Radienänderung bezieht sich auf einen jeweiligen Mittelpunkt. Jeder Krümmungsabschnitt der Krümmung der Werkzeugschneide weist einen ihm zugeordneten Radius und einem ihm zugeordneten Mittelpunkt auf.

Die stetige Radienänderung bedeutet, dass die Krümmung der Werkzeugschneide sich aus einer Vielzahl von verschiedenen Radien zusammensetzt. Es wird eine stetige Kurve gebildet. Es sind keine Vor- oder Rücksprünge in der Krümmung der Werkzeugschneide vorgesehen. Die stetige Radienänderung bedeutet, dass eine kontinuierliche Radienänderung vorhanden ist.

Das Werkstück, beispielsweise ein Linsenrohling rotiert üblicherweise unter dem Schneidelement. Das Schneidelement wird in zwei Achsen zu dem Werkstück verfahren.

Zum einen wird das Schneidelement in Richtung des Werkstückes abgesenkt, bis es in Kontakt mit der Oberfläche des Werkstückes gelangt. Bei weiterer Absenkung des Schneidelements erfolgt die spanabhebende Bearbeitung des Werkstückes.

Zum anderen wird das Schneidelement radial von außen nach innen und gegebenenfalls auch von innen nach außen relativ zu Werkstück bewegt, damit die Oberfläche des rotierenden Werkstückes spanabhebend abgetragen werden kann.

Das Schneidelement weist eine Grundfläche auf. In Draufsicht auf das Schneidelement ist die dem Werkstück zugewandte Seite der Grundfläche gekrümmt ausgebildet. Das heißt, die Werkzeugschneide des Schneidelements ist gekrümmt ausgebildet. Durch die Rotation des Werkstückes führt die zu bearbeitende Oberfläche des Werkstückes eine senkrecht zu der durch die Grundfläche des Werkstückes gebildeten Ebene ausgerichtete Relativbewegung aus.

Das erfindungsgemäße Drehwerkzeug weist den Vorteil auf, dass das Schneidelement besser ausgenutzt wird als die zum Stand der Technik gehörenden Schneidelemente.

Durch die erfindungsgemäße Ausgestaltung des Schneidelements wird auch vermieden, dass die Rillen, die bei der spanabhebenden Bearbeitung in dem Werkstück entstehen, zu groß werden, da speziell zum Rand des Werkstückes hin ein flacherer Bereich des Werkzeuges mit dem Werkstück in Berührung kommt.

Das erfindungsgemäße Drehwerkzeug weist darüber hinaus den Vorteil auf, dass auch Kunden von Bestandsmaschinen das Drehwerkzeug montieren können.

Gemäß einer vorteilhaften Ausführungsform der Erfindung ist vorgesehen, dass die Krümmung der Werkzeugschneide als Ellipsenabschnitt, Hyperbelabschnitt oder als Parabelabschnitt ausgebildet ist.

Diese Ausführungsformen weisen den Vorteil auf, dass die Schneidfläche der Werkzeugschneide zum Rand des Werkstückes hin flacher wird als bei der zum Stand der Technik gehörenden Ausbildung, bei der die Schneidfläche eine Kreisform aufweist. Durch die flache Ausbildung wird der Bearbeitungswinkel größer, und der Bearbeitungsbogen des Schneidelements wird größer. Hierdurch verringert sich die Abnutzung.

Gemäß einer weiteren vorteilhaften Ausführungsform der Erfindung ist vorgesehen, dass die Krümmung der Werkzeugschneide als Funktion zweiter oder höherer Ordnung ausgebildet ist.

Auch hierdurch wird die Schneidfläche der Werkzeugschneide flacher. Es können für die Herstellung des Schneidelements vorhandene mathematische Funktionen verwendet werden, um den Herstellungsaufwand zu reduzieren.

Eine weitere vorteilhafte Ausführungsform der Erfindung sieht vor, dass die Krümmung der Werkzeugschneide des Schneidelements verschiedene Radien aufweist, dass ein Trägerelement vorgesehen ist, dass das Trägerelement eine Trägerachse aufweist, die parallel und/oder koaxial zur Werkzeugachse ausgerichtet ist, und dass die Radien der Krümmung der Werkzeugschneide von der Achse des Schneidelements ausgehend jeweils zu den Seitenflächen zunehmen, vorzugsweise stetig zunehmen.

Gemäß dieser Ausführungsform wird in Draufsicht das Schneidelement von der Trägerachse ausgehend nach außen jeweils bis zu den Seitenflächen flacher als bei einer kreisförmigen Ausgestaltung der Werkzeugschneide.

Die Achse des Schneidelements ist versetzt zu der Trägerachse angeordnet, so dass in Draufsicht das Schneidelement einen asymmetrischen Aufbau aufweist. Hierdurch wird ein Schenkel flacher als der andere Schenkel des Schneidelements.

Durch die zu den Seitenflächen des Schneidelements größer werdenden Radien der Werkzeugschneide des Schneidelements greift in Draufsicht ein größerer Bearbeitungsbogen an dem Werkstück an, wodurch die Abnutzung des Schneidelements verringert wird.

Das erfindungsgemäße Drehwerkzeug weist vorteilhaft das Schneidelement auf, welches die Werkzeugschneide aufweist, die vorteilhaft aus einem ersten Material besteht, die eine (geometrische) Werkzeugachse des Schneidelements in senkrechtem Winkel (geometrisch) schneidet.

Das Schneidelement weist eine stetige Radienänderung auf. Die Radienänderung ist bezogen auf einen jeweiligen Mittelpunkt. Der Mittelpunkt ist bei der Ausführungsform mit einer Ellipse vorteilhaft der Mittelpunkt der Ellipse.

Bei einer Hyperbel oder einer Parabel ist der Mittelpunkt vorteilhaft der Brennpunkt der Hyperbel oder der Parabel.

Der Mittelpunkt liegt vorteilhaft auf der Werkzeugachse.

Das Drehwerkzeug weist vorteilhaft einen Öffnungswinkel bezogen auf einen Mittelpunkt auf. Dabei ist vorteilhaft vorgesehen, dass der Radius zwischen 2,0 mm und 10,0 mm beträgt.

Die Werkzeugschneide weist einen Öffnungswinkel bezogen auf den Mittelpunkt auf, der maximal 90 Grad, bevorzugt maximal 70 Grad, weiter bevorzugt maximal 60 Grad, und besonders bevorzugt maximal 55 Grad beträgt.

Das Schneidelement weist vorteilhaft eine Asymmetrie derart auf, dass die Werkzeugachse den Öffnungswinkel außermittig (geometrisch) schneidet. Vorteilhaft hieran ist, dass die Produktivität, durch eine Veränderung des Radius des Drehwerkzeuges gegenüber den im Stand der Technik zur Brillenglasherstellung genutzten festen Radien von bis 2.0 mm, gesteigert werden kann. Dies gelingt insbesondere durch die Verringerung der notwendigen Umdrehungen, um die Oberfläche zu bearbeiten. Dabei wird mittels dem Werkzeugradius von über 2,1 mm die Spiralgangbreite kontinuierlich erhöht, ohne die gedrehte Oberflächenstruktur (Spitzenhöhe) zu verändern, um die späteren Gläser mit den Standardparametern polieren zu können. Dabei werden zerstörende Kontakte der Werkzeugschneide mit Oberflächenbereichen, die bei der Brillenglasherstellung nicht abgetragen werden sollen, durch die Asymmetrie vermieden, obwohl der vergleichsweise große Radius der Werkzeugschneide genutzt wird. Insbesondere dieser Radius wird durch die Erfindung gegenüber dem Stand der Technik noch weiter vergrößert.

So steigt bei einem exemplarischen Vergleich einer symmetrischen Werkzeugschneide mit 2 mm Radius und einer asymmetrischen Werkzeugschneide mit 5 mm Radius die Spiralgangbreite bei der Bearbeitung eines Linsenrohlings kontinuierlich beispielsweise von 0,033 mm auf 0,053 mm, die Anzahl der Umdrehungen für einen typischen Durchmesser des Linsenrohlings von 65 mm sinkt zum Beispiel von circa 2.000 kontinuierlich auf 1.250 Umdrehungen, wobei jeweils eine gefertigte Spitzenhöhe zwischen den Spiralgängen bei beispielsweise 0,07 µm konstant bleibt. Die Spitzenhöhen lassen sich auch bei Einsatz des erfindungsgemäßen Schneidelements mit zumindest nahezu gleichem Aufwand polieren. Die Prozesszeit des Drehens sinkt entsprechend der notwendigen Umdrehungen bei gleicher Rotationsgeschwindigkeit um circa 37,5 %. Dieser Wert ist jedoch abhängig von dem Öffnungswinkel der zu bearbeitenden Linse. Je größer der Öffnungswinkel der zu bearbeitenden Linse ist, umso größer ist der Effekt des sich kontinuierlich vergrößernden Werkzeugschneidenwinkels.

Das erfindungsgemäße Schneidelement lässt sich auch ohne mechanischen oder steuerungstechnischen Umbau in vielen Bestandsmaschinen nutzen, sodass eine kundenfreundliche Nachrüstbarkeit der Lösung bereitsteht.

Gemäß einer weiteren vorteilhaften Ausführungsform ist das erste Material ein synthetischer Diamantwerkstoff, insbesondere aus der Gruppe Polykristalliner Diamant (PKD), Chemical Vapor Deposition(CVD), synthetischer monokristalliner Diamant (MKD) und aggregierte Diamant-Nanostäbchen(ADNR), oder polykristallines kubisches Bornitrid (CBN), oder ein Naturdiamant (ND). Diese harten Werkstoffe eignen sich besonders gut für die Bearbeitung von hochfesten Kunststoffen, wie sie bei der Brillenglasfertigung zu bearbeiten sind.

Die erfindungsgemäße Ausführungsform weist den Vorteil auf, dass das erfindungsgemäße Schneidelement, vorteilhaft bestehend aus einem Diamantwerkstoff, optimal genutzt wird. Bei konstanter Diamantgröße ist eine Radienvergrößerung vorgesehen, um die Standzeit des Schneidelementes zu erhöhen.

In einer weiteren vorteilhaften Ausführungsform der Erfindung ist die Asymmetrie derart ausgebildet, dass das Schneidelement auf einer ersten Seite der Werkzeugachse spitzer zuläuft als auf der gegenüberliegenden zweiten Seite der Werkzeugachse. Hierdurch lässt sich die Menge des vergleichsweise teuren ersten Materials reduzieren, indem in einem typischerweise weniger beanspruchten Bereich des Schneidelements auch weniger Material hinter der Werkzeugschneide angeordnet ist.

Weiterhin kann die Asymmetrie vorteilhaft derart ausgebildet sein, dass sich das Schneidelement, insbesondere die Werkzeugschneide, auf einer ersten Seite der Werkzeugachse weiter von der Werkzeugachse weg erstreckt als auf der gegenüberliegenden zweiten Seite der Werkzeugachse, vorzugsweise auf der ersten Seite wenigstens doppelt so weit wegerstreckt wie auf der zweiten Seite, weiter bevorzugt auf der ersten Seite wenigstens zweieinhalbmal so weit wegerstreckt wie auf der zweiten Seite, und besonders bevorzugt auf der ersten Seite wenigstens dreimal so weit wegerstreckt wie auf der zweiten Seite. Maximal sollte sich das Schneidelement auf der ersten Seite der Werkzeugachse um das Fünffache von der Werkzeugachse wegerstrecken als auf der gegenüberliegenden zweiten Seite der Werkzeugachse.

Vorteilhaft kann sich an den Enden der Werkzeugschneide jeweils eine Seitenfläche anschließen. Die Seitenflächen bilden einen seitlichen Abschluss der Werkzeugschneide und begrenzen gewissermaßen eine Trägermatrix der Werkzeugschneide. Dabei können die Seitenflächen exakt oder zumindest im Wesentlichen parallel zueinander und/oder der Werkzeugachse ausgerichtet sein oder beginnend an den zwei Enden der Werkzeugschneide aufeinander zulaufen.

Hinsichtlich der Größenverhältnisse ist eine Ausgestaltung vorteilhaft, bei der die Breite des Schneidelements quer zur Werkzeugachse größer ist als die Tiefe entlang der Werkzeugachse. Hierdurch lässt sich die Menge des vergleichsweise teuren ersten Materials reduzieren. Dabei liegt die Breite des Schneidelements quer zur Werkzeugachse vorteilhaft zwischen 3,0 mm und 6,0 mm, bevorzugt zwischen 3,5 mm und 5,0 mm und besonders bevorzugt zwischen 3,5 mm und 4,5 mm.

Vorteilhaft weist das Schneidelement eine Hinterkante auf, die exakt oder zumindest im Wesentlichen quer zur Werkzeugachse ausgerichtet ist.

Das Schneidelement kann vorzugsweise die Grundform eines Plättchens aufweisen, dessen Plättchendicke geringer ist als die Breite quer zur Werkzeugachse und geringer ist als die Tiefe entlang der Werkzeugachse.

Für eine effiziente Bearbeitung von Kunststoffen, insbesondere Kunststoffbrillengläsern bietet sich eine Auslegung an, wonach die Werkzeugschneide positiv mit einem Freiwinkel größer 0° ausgebildet ist, wobei der Freiwinkel vorzugsweise zwischen 0° und 5° beträgt.

Durch die vorteilhaft beiden unterschiedlichen Materialien des Trägerelementes und des Schneidelements gelingt eine materialtechnische Funktionstrennung zwischen den Aufgaben Positionieren und Stützen der Werkzeugschneide und dem Schneiden durch die Werkzeugscheide.

Vorteilhaft kann ein teures erstes Material und ein im Vergleich günstigeres zweites Material eingesetzt werden, wodurch die Drehwerkzeugkosten gering sind. Außerdem kann die Werkzeugschneide aufgrund der hohen Härte vorrangig auf das Schneiden ausgelegt werden, wohingegen das Trägerelement zäher und weniger spröde ist, um beispielsweise bei einem Einklemmen oder Festschrauben an einem Drehmeißel nicht zu brechen. Des Weiteren lassen sich die Wärmeableitung und geringfügige Dämpfungen mit dem Trägerelement aus weniger hartem Material erzielen. Die Materialeigenschaft Härte soll vorliegend gemäß der Härteskala nach Mohs verstanden werden.

Bei dem zweiten Material handelt es sich vorzugsweise um einen Werkstoff aus der Gruppe Wolfram oder Wolframlegierung, Werkzeugstahl, Bornitrit und Keramik. Wolframwerkstoffe eignen sich besonders gut zur Ausbildung hochfester dauerhafter Verbindungen mit Diamantwerkstoffen. Werkzeugstahl ist vergleichsweise preiswert. Bornitrit hat eine hohe Härte, wodurch das Schneidelement besonders präzise und ungedämpft gelagert ist. Keramiken sind ebenfalls sehr hart und meist preiswerter als Wolfram und Bornitrit.

Gemäß einer vorteilhaften Ausführung ist die Befestigung des Schneidelements am Trägerelement kraftschlüssig, formschlüssig und/oder stoffschlüssig ausgebildet. Kraftschlüssige Verbindungen sind sehr stabil, können jedoch Verformungen verursachen und in Abhängigkeit von der Härte des ersten Materials teilweise problematisch sein, weil das Schneidelement aufgrund der Sprödigkeit brechen kann. Bei derartigen Problemen wird die kraftschlüssige Verbindung daher bevorzugt in Ergänzung zu Formschluss und/oder Stoffschluss eingesetzt.

Ein Formschluss ermöglicht eine hochpräzise Befestigung und einfache Positionierung bei der Herstellung. In den meisten Anwendungsfällen reicht der Formschluss jedoch in Alleinstellung nicht für die Befestigung, weswegen er vorzugsweise durch einen Kraftschluss oder einen Stoffschluss ergänzt wird.

Ein Stoffschluss ermöglicht eine stabile dauerhafte Verbindung mit guter Wärmedurchleitung bereits in Alleinstellung. Dennoch kann er optional durch einen Formschluss oder einen Kraftschluss ergänzt werden. Hierdurch lässt sich die Stabilität und Dauerfestigkeit erhöhen und gegebenenfalls auch eine Verliersicherung für das gegebenenfalls sehr teure erste Material ausbilden.

Besonders vorteilhaft kann das Trägerelement eine rautenförmige Grundform mit zwei stumpfen und zwei spitzen Ecken aufweisen, wobei das Schneidelement an oder auf einer der spitzen Ecken angeordnet ist.

Hierdurch lässt sich das Drehwerkzeug in der Flucht hinter der Werkzeugschneide in einer Drehmaschine festlegen, sodass die Umgebung um die Werkzeugschneide möglichst frei von physischen Bauteilen ist, die mit dem Werkstück kollidieren könnten. Außerdem ist die Rautenform gängige Negativform von Drehmeißeln zur Aufnahme von herkömmlichen Schneidplatten, sodass sich das erfindungsgemäße Drehwerkzeug in Bestandsmeißel und damit auch Bestandsdrehmaschinen einsetzen lässt.

Entsprechend bietet sich eine Auslegung derart an, dass das Trägerelement die Grundform einer Wendeschneidplatte aufweist. In der Variante des Drehwerkzeugs, bei der die Trägerachse und die Werkzeugachse parallel zueinander ausgerichtet sind, kann optional ein Seitenversatz zwischen der Trägerachse und der Werkzeugachse bestehen, der vorteilhaft zwischen 0,40 cm und 1, 10 cm, bevorzugt zwischen 0,55 cm und 0,90 cm und besonders bevorzugt zwischen 0,60 cm und 0,80 cm beträgt.

Durch den Seitenversatz verschiebt sich die Werkzeugschneide vor dem Trägerelement, wobei dies vorteilhaft in der Richtung erfolgt, die bewirkt, dass die Werkzeugschneide die Trägerachse (geometrisch) weniger schräg schneidet. Entsprechend liegt dann die Mittelachse des Spiralgangs bei einer Bearbeitung von gekrümmten Stirnflächen zentraler vor der Trägerachse. Ein geringfügiger Versatz kann aber durchaus gewünscht sein, denn die Mittellinie des Spiralgangs verlagert sich aufgrund der prismatischen Schräge der Bearbeitungsfläche gegenüber einer reinen Planfläche.

Vorzugsweise weist das Trägerelement ein Befestigungsloch zur Festlegung auf einem Drehmeißel auf. Damit lässt sich eine schnelle Montage und ein schneller Austausch des Drehwerkzeugs, beispielsweise mittels einer Befestigungsschraube, erzielen. Das Drehwerkzeug kann auch einen Drehmeißel aufweisen. An diesem ist das Trägerelement mechanisch lösbar festgelegt, beispielsweise mittels einer Befestigungsschraube. Der Drehmeißel ist also vorteilhaft ein vom Trägerelement separates Bauteil. Er hat vorzugsweise einen Montageschaft zur Festlegung in einer Werkzeugaufnahme einer Drehmaschine. Dabei besteht der Drehmeißel bevorzugt aus Werkzeugstahl.

Gemäß einer weiteren vorteilhaften Ausführungsform der Erfindung ist vorgesehen, dass in oder an dem Drehwerkzeug ein Transponder angeordnet ist.

Transponder bestehen aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 MHz abgestimmt.

Gelangt ein Transponder in den Erfassungsbereich eines RFID-Antennensystems (RFID - Radio Frequency Identification) erfolgt eine Übertragung von Daten vom und an den Transponder. Die Datenübertragung basiert auf der magnetischen Kopplung der Wechselfelder des Readers und des Transponders im Nahbereich der wenigstens einen Antenne.

Ist ein Transponder im Bereich einer Antenne angeordnet, können Identifikationsdaten von dem Transponder ausgelesen werden, um zum Beispiel zu prüfen, ob das korrekte Werkzeug eingesetzt wird. Es können auch Daten an den Transponder übertragen werden, um zum Beispiel die Betriebsstunden des Werkzeuges auf dem Transponder abzuspeichern.

Die Daten des Transponders können automatisch in der Drehmaschine eingelesen werden. Hierdurch ist es möglich, dass die Drehmaschine automatisch eine Kompensation durchführt.

Eine weitere vorteilhafte Ausführungsform der Erfindung betrifft eine Drehmaschine mit einem Drehwerkzeug und mit einer Werkstückspindel zur Aufnahme und Rotation eines Werkstücks um eine Rotationsachse, welche sich dadurch auszeichnet, dass die Rotationsachse und die Werkzeugachse zur Bearbeitung einer Stirnfläche des Werkstücks exakt oder zumindest im Wesentlichen parallel zueinander ausgerichtet sind, und dass das Schneidelement und die Werkstückspindel relativ zueinander in zwei oder drei Maschinenachsrichtungen bewegbar mit einem Stellantrieb angetrieben sind.

Mit dieser Drehmaschine lassen sich nunmehr aufgrund der flacheren Werkzeugschneide mit der stetigen Radiusänderung zu den Seitenflächen hin gekrümmte Stirnflächen besonders schnell herstellen. Vorteilhaft lässt sich beispielsweise die Stirnseite eines Linsenrohlings von außen nach innen zur Rotationsachse mit der Werkzeugschneide abfahren. Es resultiert durch die Rotation des Werkstücks ein spiralförmiger Arbeitspfad, den die Werkzeugschneide auf dem Werkstück zurücklegt. Die Querbewegung der Werkzeugschneide wird zusätzlich durch eine Längsbewegung parallel oder zumindest im Wesentlichen gleichgerichtet zur Rotationsachse überlagert.

Vorzugsweise weist der Stellantrieb einen Servomotor wie ein Fast-Tool, eine Tauchspule oder einen Piezo-Aktuator auf. Außerdem bietet es sich an, einen Stellantrieb mit einem Kreuztisch einzusetzen, um die Maschinenachsen auszubilden.

Vorzugsweise ist eine der Maschinenachsrichtungen zumindest im Wesentlichen oder exakt parallel zur Trägerachsel ausgerichtet.

Die Drehmaschine kann vorteilhaft mit einem ersten Drehwerkzeug und einem zweiten Drehwerkzeug, dessen Werkzeugradien kleiner sind als die Werkzeugradien des ersten Drehwerkzeugs, so betrieben werden, dass mittels einer Entscheidungslogik entschieden wird, ob die Bearbeitung einer vordefinierten Bearbeitungsfläche eines Werkstücks mit dem ersten Drehwerkzeug oder dem zweiten Drehwerkzeug durchgeführt wird, wobei die Entscheidungslogik eine maximal herzustellende Flächenkrümmung bestimmt und mit einem definierten Grenzwert abgleicht und/oder einen maximal herzustellenden Prismenwinkel bestimmt und mit einem definierten Grenzwert abgleicht, und wobei bei Übersteigen eines der Grenzwerte anstatt des ersten Drehwerkzeugs das zweite Drehwerkzeug für die Bearbeitung eingesetzt wird.

Mit dem Verfahren wird zum Beispiel bei der Brillenglasfertigung mit ständig wechselnden Oberflächengeometrien und Linsenrohlingskrümmungen sichergestellt, dass wann immer möglich, das aufgrund der größeren Werkzeugradien schneller arbeitende erste Drehwerkzeug eingesetzt wird. Wann immer jedoch, aufgrund eines zu steilen Prismenwinkels oder zu engem Radius der breite Werkzeugradius die Zieloberfläche nicht herstellen kann, wird auf das zweite Drehwerkzeug mit kleineren Werkzeugradien zurückgegriffen.

Das Verfahren erfolgt optional so, dass die Entscheidungslogik automatisiert mit einer Steuereinheit erfolgt und das erste oder zweite Drehwerkzeug automatisiert angesteuert und eingesetzt wird. Damit ist ein vollautomatisierter Verfahrensablauf in den meist ohnehin automatisierten CNC-Fertigungsablauf beispielsweise einer Brillenglasfertigung ermöglicht.

Bei einem weiteren Verfahren zum Betrieb einer Drehmaschine mit einem ersten Drehwerkzeug ist vorgesehen, dass am Werkstück eine konkave Stirnseite durch Zerspanung hergestellt wird, indem das Werkstück rotierend um eine Rotationsachse angetrieben ist und das Drehwerkzeug von außen nach innen auf die Rotationsachse zubewegt wird, wobei die Rotationsachse und die Werkzeugachse zur Bearbeitung der Stirnfläche exakt oder zumindest im Wesentlichen parallel zueinander ausgerichtet sind, und wobei das Drehwerkzeug so ausgerichtet ist, dass der Mittelpunkt zwischen der Werkzeugachse und der Rotationsachse liegt.

Entsprechend ist basierend auf der einseitig abzufahrenden Hälfte des konkaven Werkstücks eine passende Ausrichtung der asymmetrischen Werkzeugschneide realisiert. Grundsätzlich kann dabei eine Linsenachse des Werkstücks koaxial zur Rotationsachse ausgerichtet sein. Alternativ ist jedoch auch möglich, dass das Werkstück prismatisch an einem Werkstückhalter gehalten ist, vorzugsweise aufgeblockt ist, sodass eine Linsenachse des Werkstücks einen Winkel größer als 0°, vorzugsweise zwischen 0,20° und 2,00°, weiter bevorzugt zwischen 0,50° und 1,80° und besonders bevorzugt zwischen 0,80° und 1,50° zur Rotationsachse aufweist. Durch diesen Winkel können ungewollte Kollisionen des Werkstücks mit der Werkzeugschneide vermieden werden, sodass zusätzlich zu den ohnehin mit dem ersten Drehwerkzeug bearbeitbaren Flächen weitere Flächengeometrien schnell herstellbar sind. Damit reduziert sich beispielsweise die Anzahl der Linsenrohlinge, die mit einem Drehwerkzeug mit kleineren Werkzeugradien bearbeitet werden müssen.

Die Erfindung betriff darüber hinaus eine Verwendung eines Drehwerkzeugs mit einem Schneidelement bei der Herstellung gekrümmter Oberflächen durch Zerspanung in einem Drehprozess. Auch bei dieser Verwendung wird eine hohe Effizienz durch die flachere Ausbildung der Werkzeugschneide des Schneidelements erzielt.

Von besonderem Vorteil sind die Verfahren und die Verwendung, wenn das Werkstück ein Linsenrohling aus einem transparenten oder transluzenten Werkstoff ist. Von besonderem Vorteil sind die Verfahren und die Verwendung auch, wenn das Werkstück zu einer optischen Linse, insbesondere einem Brillenglas, und ganz besonders zu einem Rezeptglas mit einer asphärischen Fläche oder einer Freiformfläche bearbeitet wird.

Weitere Merkmale und Vorteile der Erfindung ergeben sich anhand der zugehörigen Zeichnungen, in denen mehrere Ausführungsbeispiele eines Drehwerkzeuges dargestellt sind, ohne die Erfindung auf diese Ausführungsbeispiele zu beschränken. In den Zeichnungen zeigen:
- Fig. 1: eine schematische Draufsicht auf ein Drehwerkzeug mit Schneidelement;
- Fig. 2: ein geändertes Ausführungsbeispiel eines Schneidelementes in Draufsicht;
- Fig. 3: eine Seitenansicht des Drehwerkzeugs nach Fig. 1 aufweisend einen zusätzlichen Drehmeiβel;
- Fig. 4: eine Schemaskizze einer Drehmaschine mit dem Drehwerkzeug nach Fig. 1 sowie einem Werkstück;
- Fig. 5: eine perspektivische Ansicht eines Drehwerkzeuges mit einem Schneidelement;
- Fig. 6: eine schematische Darstellung eines Schneidelementes während eines Bearbeitungsvorganges;
- Fig. 7: eine Draufsicht auf ein Schneidelement gemäß der Erfindung;
- Fig. 8: eine Draufsicht auf ein Schneidelement gemäß dem Stand der Technik;
- Fig. 9: eine Draufsicht auf ein Schneidelement bei der Bearbeitung im mittleren Bereich eines Linsenrohlings;
- Fig. 10: eine Draufsicht auf ein Schneidelement bei der Bearbeitung im Randbereich eines Linsenrohlings.

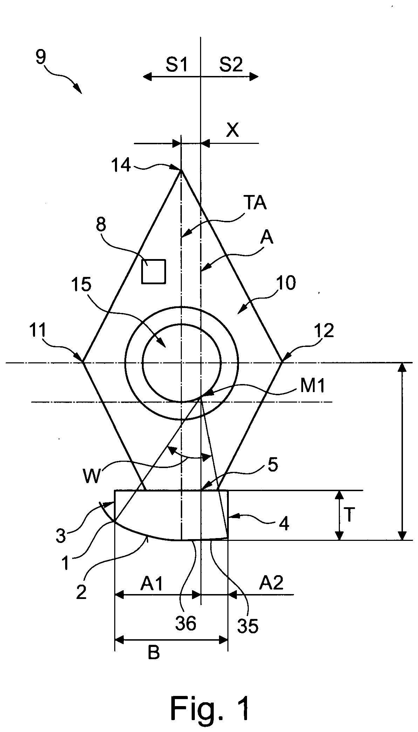

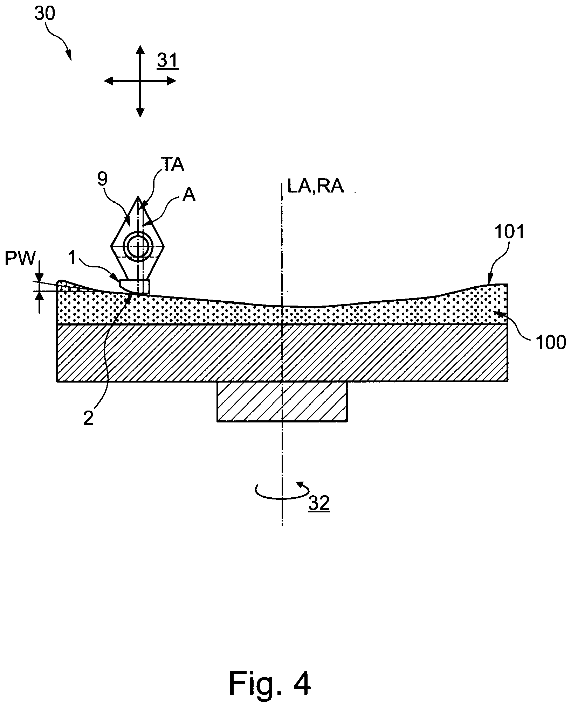

Fig. 1 zeigt eine schematische Draufsicht auf ein Drehwerkzeug 9 mit einem Schneidelement 1 für eine Drehmaschine (in Fig. 4 mit der Bezugsziffer 30 dargestellt) der Zerspantechnik, das auf einem Trägerelement 10 angeordnet ist.

Das Schneidelement 1 weist eine Werkzeugschneide 2 auf, welche in Draufsicht eine Krümmung, im vorliegenden Fall die Form eines Ellipsenabschnittes aufweist.

Von einer Achse A ausgehend sind die Radien des Ellipsenabschnittes des Schneidelementes 1 jeweils in Richtung der Seitenflächen 3, 4 gleich. Die Achse A ist die Symmetrieachse des Schneidelements 1. Ein Ellipsenabschnitt 35, der sich in Richtung der Seitenfläche 4 erstreckt, weist gleich große Radien auf wie ein Ellipsenabschnitt 36, der sich in Richtung der Seitenfläche 3 erstreckt.

Das Schneidelement 1 besteht aus einem ersten Material, bei dem es sich um einen synthetischen Diamantwerkstoff aus der Gruppe Polykristalliner Diamant (PKD), Chemical Vapor Deposition (CVD), synthetischer monokristalliner Diamant (MKD) und Aggregierte Diamant-Nanostäbchen (ADNR), oder polykristallines kubisches Bornitrid (CBN), oder einen Naturdiamanten (ND) handelt.

Wie der Fig. 1 zu entnehmen ist, ist das Schneidelement 2 asymmetrisch ausgestaltet. Dieser Asymmetrie wohnen folgende Eigenschaften inne:
- Die Werkzeugachse A schneidet den Öffnungswinkel W außermittig;
- auf einer ersten Seite S1 der Werkzeugachse A ist ein längerer Abschnitt A1 der Werkzeugschneide 2 angeordnet als auf der gegenüberliegenden zweiten Seite S2 der Werkzeugachse A;
- das Schneidelement 1 läuft auf der ersten Seite S1 der Werkzeugachse A spitzer zu als auf der zweiten Seite S2;
- das Schneidelement 1 erstreckt sich auf der ersten Seite S1 weiter von der Werkzeugachse A weg als auf der zweiten Seite S2, hier insbesondere um mehr als dreimal so weit.

An den Enden der Werkzeugschneide 2 schließt sich jeweils die Seitenfläche 3, 4 an die Werkzeugschneide 2 an. Die Seitenflächen 3, 4 sind parallel zueinander und auch zu der Werkzeugachse A ausgerichtet.

Der Werkzeugschneide 2 gegenüberliegend bildet eine gerade Hinterkante 5 einen Abschluss des Schneidelements 1. Die Hinterkante 5 ist quer, also senkrecht zur Werkzeugachse A ausgerichtet.

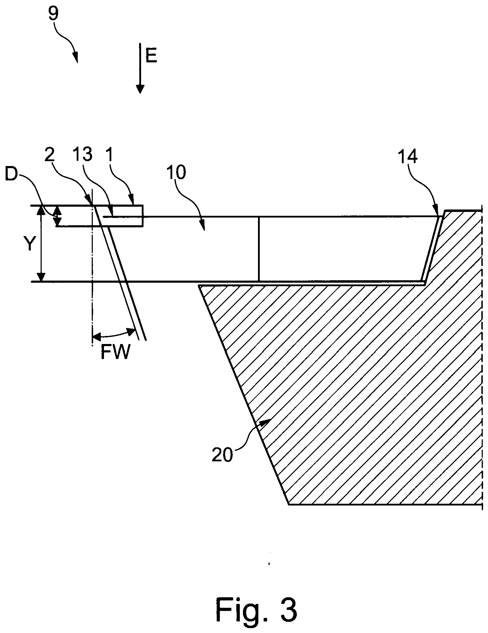

Hinsichtlich der relativen Dimensionen wird deutlich, dass die Breite B des Schneidelements 1 quer zur Werkzeugachse A größer ist als die Tiefe T entlang der Werkzeugachse A. Wie der Fig. 3 zu entnehmen ist, ist die Dicke D des Schneidelements 1 geringer als die Tiefe T entlang der Werkzeugachse A. In absoluten Werten kann die Breite B quer zur Werkzeugachse A beispielsweise zwischen 3,5 mm und 4,5 mm betragen.

Die Draufsicht auf das Schneidelement 1 ist in Fig. 3 mit dem Pfeil E gekennzeichnet.

Das Drehwerkzeug 9 gemäß Fig. 1 weist einen Transponder 8 auf. Auf dem Transponder 8 können Daten des Drehwerkzeuges 9 abgespeichert sein, um das Drehwerkzeug 9 zu identifizieren. Die Daten des Transponders 8 können automatisch in der Drehmaschine 30 eingelesen werden. Hierdurch ist es möglich, dass die Drehmaschine 30 automatisch eine Kompensation durchführt.

Die Werkzeugschneide 2 weist einen Öffnungswinkel W auf, der am Mittelpunkt M zu bestimmen ist. Mit anderen Worten ist die Werkzeugschneide 2 durch einen Ellipsenabschnitt definiert.

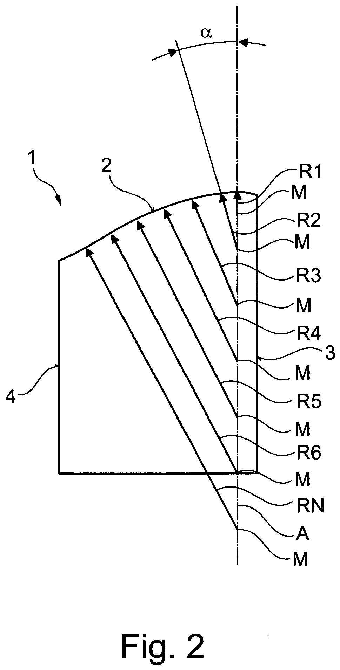

In Fig. 2 ist ein Schneidelement 1 mit eine Krümmung mit einer Funktion höherer Ordnung in Draufsicht dargestellt.

Die Krümmung der Werkzeugschneide 2 setzt sich aus einer Vielzahl von sich stetig verändernden Radien R1, R2, R3, R4, R5, R6 bis RN zusammen. Von der Achse A ausgehend werden in Richtung der Seitenflächen 3, 4 des Schneidelementes 1 die Radien R1, R2, R3, R4, R5, R6 bis RN immer größer.

Die Radien RN liegen vorteilhaft zwischen 4,5 mm und 5,5 mm.

Der kleinste Radius ist der Radius R1. Dieser Radius fällt mit der Achse A des Schneidelements 2 zusammen. Die Werkzeugschneide weist die Seitenflächen 3, 4 auf. Die Radien R2, R3 werden in Richtung der Seitenfläche 3 größer. Das heißt, dass R1 < R2 < R3. Dies setzt sich bis RN fort.

In Richtung der Seitenfläche 4 werden die Radien ebenfalls größer als der Radius R1.

Von der Achse A ausgehend sind die Radien in beiden Richtungen zu den Seitenflächen 3, 4 gleich. Die Achse A ist die Symmetrieachse des Schneidelements 1.

Mittelpunkte M bilden die Ausgangspunkte der Radien R1, R2, R3 bis RN. Die Mittelpunkte M liegen auf der Werkzeugachse A, die die Werkzeugschneide 2 in senkrechtem Winkel schneidet. Die Mittelpunkte M sind auf der Werkzeugachse A versetzt zueinander angeordnet. Der Winkel α nimmt mit den sich vergrößernden Radien R1, R2 bis RN zu.

Wie man vor allem in Fig. 3 erkennen kann, ist die Werkzeugschneide 2 positiv mit einem Freiwinkel FW größer 0° ausgebildet, der beispielhaft zwischen 0° und 5° beträgt. Das Trägerelement 10 liegt zurückversetzt hinter dem Freiwinkel FW. In diesem Ausführungsbeispiel verläuft das vordere Ende des Trägerelements 10 parallel zurückversetzt zum Freiwinkel FW. Die gesamte Drehwerkzeugdicke Y kann beispielsweise zwischen 2 mm und 4 mm liegen. Das Trägerelement 10 besteht aus einem zweiten Material, das eine geringere Härte aufweist als das erste Material (gemäß Härteskala nach Mohs). Das zweite Material kann ein Werkstoffaus der Gruppe Wolfram oder Wolframlegierung, Werkzeugstahl, Bornitrit und Keramik sein.

Das Trägerelement 10 hat eine Trägerachse TA, die parallel um einen Seitenversatz X versetzt zur Werkzeugachse A ausgerichtet ist.

Das Trägerelement 10 weist eine rautenförmige Grundform mit zwei stumpfen 11,12 und zwei spitzen Ecken 13, 14 auf und die Trägerachse TA schneidet diese zwei spitzen Ecken 13, 14. Hierdurch hat das Trägerelement 10 die Grundform einer Wendeschneidplatte.

Das Schneidelement 1 ist derart auf einer der spitzen Ecken 13 angeordnet, dass die Werkzeugschneide 2 über diese spitze Ecke 13 hinausragt und die Hinterkante in Richtung der anderen spitzen Ecke 14 weist. Die Befestigung des Schneidelements 1 am Trägerelement 10 ist form- und/oder stoffschlüssig ausgebildet. Für den Formschluss ist eine Negativausnehmung für einen Teilausschnitt des Schneidelements 1 an der spitzen Ecke 13 ausgebildet. Mittels einer Schraube (nicht dargestellt), die durch das in Fig. 1 gezeigte Befestigungsloch 15 im Zentrum des Trägerelements 10 in den von Fig. 3 gezeigten Drehmeißel 20 einschraubbar ist, wird das Trägerelement 10 form- und kraftschlüssig am Drehmeißel festgelegt. Für den Formschluss ist eine Negativausnehmung für einen Teilausschnitt des Trägerelements 10 am Drehmeißel 20 ausgebildet. Der Drehmeißel 20 besteht aus Werkzeugstahl.

In der Schemaskizze der Fig. 4 erkennt man eine Drehmaschine 30 mit dem Drehwerkzeug nach Fig. 1 sowie ein Werkstück 100, nämlich einen Linsenrohling, der auf einem Werkstückhalter 33 aufgeblockt ist. Der Werkstückhalter 33 ist mit einer nur angedeuteten Werkstückspindel 32 zur Aufnahme und Rotation des Werkstücks 100 um eine Rotationsachse RA angetrieben. Eine Linsenachse LA und die Rotationsachse RA sind vorliegend koaxial ausgerichtet.

Das Schneidelement 1 und die Werkstückspindel 32 sind mit einem nur angedeuteten Stellantrieb 31 relativ zueinander in zwei oder drei Maschinenachsrichtungen bewegbar angetrieben.

In Fig. 4 ist zudem dargestellt, wie ein lokaler Prismenwinkel PW zu bestimmen ist. Es handelt sich erkennbar um den Winkel der Stirnfläche zu einer imaginären Normalebene bezogen auf die Rotationsachse RA.

Mit der Drehmaschine 30 lässt sich ein Verfahren durchführen, gemäß dem die konkave Stirnseite des Werkstücks 100 durch Zerspanung hergestellt wird, indem das Werkstück 100 rotierend um die Rotationsachse RA angetrieben ist und das Drehwerkzeug 9 von außen nach innen, also auf die Rotationsachse RA zubewegt wird. Dabei sind die Rotationsachse RA und die Werkzeugachse A zur Bearbeitung der Stirnfläche 101 parallel zueinander ausgerichtet.

Das Drehwerkzeug 9 ist so ausgerichtet, dass der Mittelpunkt M zwischen der Werkzeugachse A und der Rotationsachse RA liegt.

Die in Fig. 1 dargestellte Krümmung der Werkzeugschneide 2 entspricht einem Ellipsenabschnitt, wie oben beschrieben wurde.

Die Krümmung kann auch einem Parabelabschnitt oder einem Hyperbelabschnitt oder einer Funktion höherer Ordnung entsprechen. Eine Krümmung mit einer Funktion höherer Ordnung ist in Fig. 2 dargestellt.

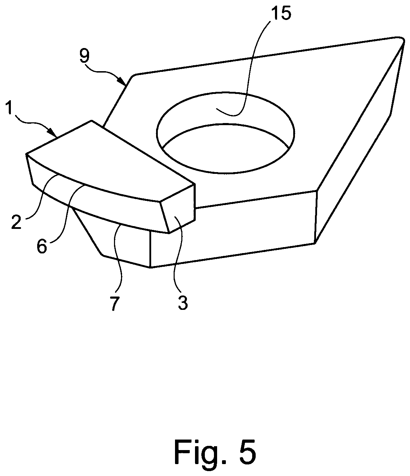

Gemäß Fig. 5 ist eine perspektivische Ansicht eines Drehwerkzeuges 9 gezeigt. Das Drehwerkzeug 9 trägt das Schneidelement 2. Das Schneidelement 1 weist die Werkzeugschneide 2 auf. Da das Schneidelement 1 eine gekrümmte Kante 6 aufweist, ist auch die Werkzeugschneide 2 gekrümmt ausgebildet. Das Schneidelement 2 weist darüber hinaus die Seitenflächen 3, 4 auf, wobei in Fig. 5 nur die Seitenfläche 3 erkennbar ist.

Das Schneidelement 1 weist eine Kante 6 und eine Kante 7 auf. Die Kante 7 liegt in Draufsicht auf das Schneidelement 1 gesehen um den Freiwinkel FW (Fig. 3) zurückversetzt zu der Kante 6. Die Kante 6 bildet die Werkzeugschneide 2.

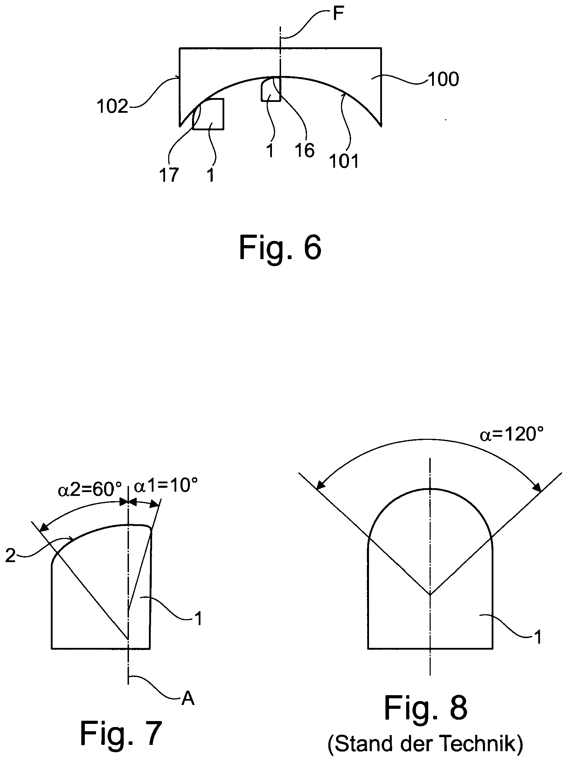

Fig. 6 zeigt schematisch einen Bearbeitungsvorgang eines Werkstückes 100 mit einem Schneidelement 1, wobei das Drehwerkzeug 9 nicht dargestellt ist. Es sind zwei Schneidelemente 1 dargestellt, wobei es sich hierbei um ein und dasselbe Schneidelement 1 in zwei verschiedenen Positionen handelt. Einmal ist das Schneidelement zum Bearbeiten der Stirnfläche 101 des Werkstückes 100 im Bereich einer Mittelachse F des Werkstückes 100 positioniert und einmal in Richtung der einer Randfläche 102 des Werkstückes 100.

Das Schneidelement 1 liegt im Bereich der Mittelachse F des Werkstückes 100 lediglich mit einem kleinen Bogenbereich 16 an der Stirnfläche 101 des Werkstückes 100 an.

Ist das Schneidelement 1 zur Bearbeitung der Stirnfläche 101 des Werkstückes 100 in Richtung der Randfläche 103 positioniert, liegt das Schneidelement 1 mit einem Bogenbereich 17 an der Stirnfläche 101 an. Der Bogenbereich 17 ist größer als der Bogenbereich 16.

Da die Radien R1 bis RN der Werkzeugschneide 2 des Schneidelementes 1 von der Mittelachse A zu den Seitenflächen 3, 4 größer werden, liegt das Schneidelement 1 im Randbereich des Werkstückes 100 mit einem größeren Bogenbereich an der Stirnfläche 101 an als in einer Mitte des Werkstückes 100.

In Fig. 7 ist die Geometrie des Schneidelementes 1 in Draufsicht dargestellt. Das Schneidelement 1 weist eine Werkzeugschneide 2 mit einer Krümmung in Form eines Ellipsenabschnittes auf. Der Winkel α1 beträgt 10°, der Winkel α2 beträgt 60°.

In Fig. 8 ist ein zum Stand der Technik gehörendes Schneidelement 1 dargestellt mit einer Werkzeugschneide, die in Draufsicht einen Kreisabschnitt aufweist. Hier ist der Öffnungswinkel α = 120°.

Die in den Fig. 6 und 7 dargestellten Schneidelemente 1 haben Auswirkungen auf eine Spitzenhöhe und einen Spitzenabstand, die bei der spanabhebenden Bearbeitung mit dem Drehwerkzeug in dem Werkstück 100 entstehen.

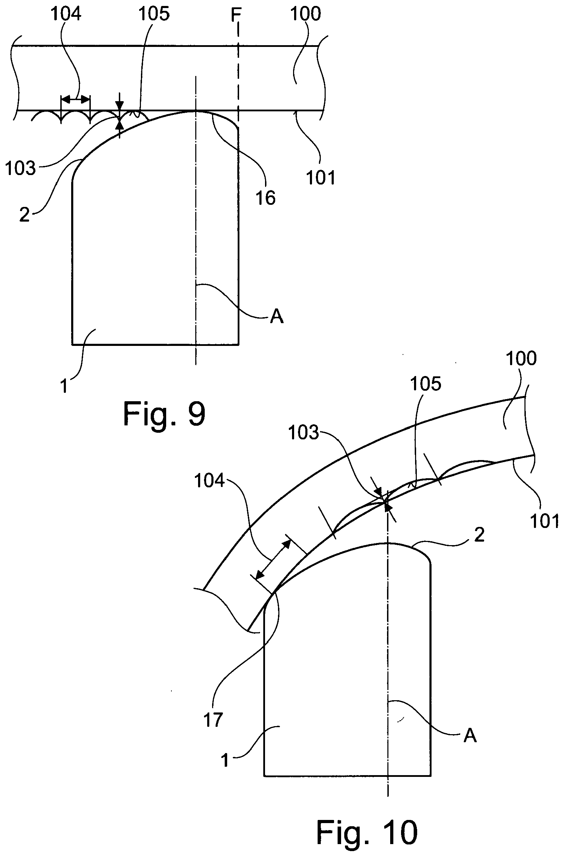

Das Werkstück 100 rotiert mit konstanter Geschwindigkeit. Das Schneidelement 1 wird beispielsweise von außen von der Randfläche 102 in Richtung der Mittelachse F verfahren. Bei der spanabhebenden Bearbeitung entstehen hierbei Rillen. Je weiter das Schneidelement 1 in Richtung der Mittelachse F bewegt wird, umso kleiner wird der Umfang der Rillen. Die Rillen weisen eine Spitzenhöhe 103 und einen Spitzenabstand 104 auf, die in Fig. 9 und 10 dargestellt sind.

In Richtung Randfläche 102 überfährt das Schneidelement 1 den größten Umfang. Hier ist die aus den Rillen bestehende Spirale am breitesten. Trotzdem soll die Spitzenhöhe konstant bleiben.

Wie in Fig. 9 dargestellt, befindet sich das Schneidelement 1 in der Mitte des Werkstückes 100, wie in Fig. 6 im Bereich der Mittelachse F. In diesem Bereich ist die Stirnfläche 101 des Werkstückes 100 flacher als im Randbereich. Das Schneidelement 1 liegt mit einem Bogenbereich 16 an der Stirnfläche 101 an. Es entstehen in der Stirnfläche 101 Rillen mit Spitzen 103.

Wie in Fig. 10 dargestellt, ist das Schneidelement 1 in Richtung der Randfläche 102 des Werkstückes 100 positioniert. Die Krümmung der Stirnfläche 101 ist in diesem Bereich größer als die Krümmung der Stirnfläche 101 in Fig. 9.

Das Schneidelement 1 liegt mit einem Bogenbereich 17 an der Stirnfläche 101 zur spanabhebenden Bearbeitung an.

Die Rillen 105 sind in Fig. 10, d.h. im Bereich der Randfläche 102 größer. Der Spitzenabstand 104 der Rillen 105 ist im Randbereich größer als in der Mitte des Werkstückes 100.

Mit dem erfindungsgemäßen Schneidelement 1 werden Rillen 105 erzeugt, die gleichbleibende Spitzenhöhen 103 unabhängig von der Position des Schneidelementes 1 beim Bearbeiten der Stirnfläche 101 aufweisen.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszahlen

- 1: Schneidelement
- 2: Werkzeugschneide
- 3: Seitenfläche
- 4: Seitenfläche
- 5: Hinterkante
- 6: Kante des Schneidelements 1
- 7: Kante
- 8: Transponder
- 9: Drehwerkzeug
- 10: Trägerelement
- 11: stumpfe Ecke
- 12: stumpfe Ecke
- 13: spitze Ecke
- 14: spitze Ecke
- 15: Befestigungsloch
- 16: Bogenbereich
- 17: Bogenbereich
- 20: Drehmeißel
- 30: Drehmaschine
- 31: Stellantrieb
- 32: Werkstückspindel
- 33: Werkstückhalter
- 35: Ellipsenabschnitt
- 36: Ellipsenabschnitt
- 100: Werkstück
- 101: Stirnfläche
- 102: Randfläche
- 103: Spitzenhöhe
- 104: Spitzenabstand
- 105: Rillen

- A: Werkzeugachse
- A1: erster Abschnitt
- A2: zweiter Abschnitt
- B: Breite
- D: Plättchendicke
- E: Pfeil
- F: Mittelachse Werkstück
- FW: Freiwinkel
- LA: Linsenachse
- M1: Mittelpunkt
- M: Mittelpunkte
- PW: Prismenwinkel
- R1, R2, R3 ... RN: Werkzeugradien
- RA: Rotationsachse
- S1: erste Seite
- S2: zweite Seite
- T: Tiefe
- TA: Trägerachse
- W: Öffnungswinkel
- X: Seitenversatz
- Y: Drehwerkzeugdicke

## Patentansprüche

1. Drehwerkzeug mit einem Schneidelement für eine Drehmaschine der Zerspantechnik, wobei das Schneidelement (1) eine Werkzeugschneide (2) aufweist,
- wobei die Werkzeugschneide (2) des Schneidelements (1) in Draufsicht eine Krümmung aufweist,
- bei dem die Werkzeugschneide (2) eine Werkzeugachse (A) des Schneidelements (1) in senkrechtem Winkel schneidet,
- bei dem das Schneidelement (1) einen Öffnungswinkel (W) bezogen auf einen Mittelpunkt (M) aufweist,
- wobei das Schneidelement (1) eine Asymmetrie derart aufweist, dass die Werkzeugachse (A) den Öffnungswinkel (W) außermittig schneidet,
**dadurch gekennzeichnet, dass** in Draufsicht auf das Schneidelement (1) die Krümmung der Werkzeugschneide (2) eine stetige Radienänderung aufweist.

2. Drehwerkzeug mit einem Schneidelement nach Anspruch 1, **dadurch gekennzeichnet, dass** die Krümmung der Werkzeugschneide (2) als Ellipsenabschnitt, als Hyperbelabschnitt oder als Parabelabschnitt ausgebildet ist.

3. Drehwerkzeug mit einem Schneidelement nach Anspruch 1 oder 2, **dadurch gekennzeichnet, dass** die Krümmung der Werkzeugschneide (2) als Funktion zweiter oder höherer Ordnung ausgebildet ist.

4. Drehwerkzeug nach einem der vorhergehenden Ansprüche, **dadurch gekennzeichnet, dass** die Krümmung der Werkzeugschneide (2) des Schneidelements (1) verschiedene Radien aufweist, dass ein Trägerelement (10) vorgesehen ist, dass das Trägerelement (10) eine Trägerachse (TA) aufweist, die parallel und/oder koaxial zur Werkzeugachse (A) ausgerichtet ist, und dass die Radien der Krümmung der Werkzeugschneide (2) von der Achse (A) des Schneidelements ausgehend jeweils zu den Seitenflächen (3, 4) zunehmen, vorzugsweise stetig zunehmen.

5. Drehwerkzeug mit einem Schneidelement nach einem der vorhergehenden Ansprüche, **dadurch gekennzeichnet, dass** die Werkzeugschneide aus einem ersten Material besteht, und dass das erste Material
- ein synthetischer Diamantwerkstoff aus der Gruppe Polykristalliner Diamant (PKD), Chemical Vapor Deposition (CVD), synthetischer monokristalliner Diamant (MKD) und Aggregierte Diamant-Nanostäbchen (ADNR) oder
- polykristallines kubisches Bornitrid (CBN) oder
- ein Naturdiamant (ND) ist.

6. Drehwerkzeug mit einem Schneidelement (1) nach einem der vorhergehenden Ansprüche, **dadurch gekennzeichnet, dass** die Asymmetrie derart ausgebildet ist, dass auf einer ersten Seite (S1) der Werkzeugachse (A) ein längerer Abschnitt (A1) der Werkzeugschneide (2) angeordnet ist als auf der gegenüberliegenden zweiten Seite (S2) der Werkzeugachse (A).

7. Drehwerkzeug mit einem Schneidelement (1) gemäß einem der vorhergehenden Ansprüche, **dadurch gekennzeichnet, dass** die Asymmetrie derart ausgebildet ist, dass das Schneidelement (1) auf einer ersten Seite (S1) der Werkzeugachse (A) spitzer zuläuft als auf der gegenüberliegenden zweiten Seite (S2) der Werkzeugachse (A).

8. Drehwerkzeug mit einem Schneidelement (1) gemäß einem der vorhergehenden Ansprüche, **dadurch gekennzeichnet, dass** sich an den Enden der Werkzeugschneide (2) jeweils eine Seitenfläche (3, 4) anschließt,

9. Drehwerkzeug mit einem Schneidelement (1) gemäß einem der vorhergehenden Ansprüche, **dadurch gekennzeichnet, dass** eine Breite (B) des Schneidelements quer zur Werkzeugachse (A) größer ist als die Tiefe (T) entlang der Werkzeugachse (A), und dass die Breite (B) größer oder gleich 2 Millimeter und kleiner oder gleich 10 Millimeter ist.

10. Drehwerkzeug mit einem Schneidelement (1) gemäß einem der vorhergehenden Ansprüche, **dadurch gekennzeichnet, dass** die Werkzeugschneide (2) positiv mit einem Freiwinkel (FW) größer 0° ausgebildet ist, wobei der Freiwinkel (FW) vorzugsweise zwischen 10° und 25°, weiter bevorzugt zwischen 14° und 21°, und besonders bevorzugt zwischen 17° und 19° beträgt.

11. Drehwerkzeug (9) mit einem Schneidelement (1) gemäß einem der vorhergehenden Ansprüche, **dadurch gekennzeichnet, dass** ein Trägerelement (10) aus einem zweiten Material vorgesehen ist und dass das erste Material eine höhere Härte aufweist als das zweite Material.

12. Drehwerkzeug (9) gemäß Anspruch 11, **dadurch gekennzeichnet, dass** das Trägerelement (10) eine rautenförmige Grundform mit zwei stumpfen (11, 12) und zwei spitzen Ecken (13, 14) aufweist, wobei das Schneidelement (1) an oder auf einer der spitzen Ecken (13) angeordnet ist.

13. Drehwerkzeug (9) nach einem der vorhergehenden Ansprüche, wobei die Trägerachse (TA) und die Werkzeugachse (A) parallel zueinander ausgerichtet sind, **dadurch gekennzeichnet, dass** ein Seitenversatz (X) zwischen Trägerachse (TA) und der Werkzeugachse (A) besteht, der zwischen 0,40 cm und 1,10 cm, bevorzugt zwischen 0,55 cm und 0,90 cm und besonders bevorzugt zwischen 0,60 cm und 0,80 cm beträgt.

14. Drehwerkzeug nach einem der vorhergehenden Ansprüche, **dadurch gekennzeichnet, dass** in dem Drehwerkzeug (9) ein Transponder (8) angeordnet ist.

15. Drehmaschine (30) mit einem Drehwerkzeug (9) nach einem der Ansprüche 1 bis 14 und mit einer Werkstückspindel (32) zur Aufnahme und Rotation eines Werkstücks (100) um eine Rotationsachse (RA), **dadurch gekennzeichnet, dass** die Rotationsachse (RA) und die Werkzeugachse (A) zur Bearbeitung einer Stirnfläche (101) des Werkstücks (100) exakt oder zumindest im Wesentlichen parallel zueinander ausgerichtet sind, und dass das Schneidelement (1) und die Werkstückspindel (32) relativ zueinander in zwei oder drei Maschinenachsrichtungen bewegbar mit einem Stellantrieb (31) angetrieben sind.

16. Verwendung eines Drehwerkzeuges mit einem Schneidelement (1) gemäß einem der Ansprüche 1 bis 14 bei der Herstellung gekrümmter Oberflächen durch Zerspanung in einem Drehprozess.

## Geänderte Patentansprüche

### Geänderte Patentansprüche gemäss Regel 137(2) EPÜ.

1. Drehwerkzeug mit einem Schneidelement für eine Drehmaschine der Zerspantechnik, wobei das Schneidelement (1) eine Werkzeugschneide (2) aufweist,
- wobei die Werkzeugschneide (2) des Schneidelements (1) in Draufsicht eine Krümmung aufweist,
- bei dem die Werkzeugschneide (2) eine Werkzeugachse (A) des Schneidelements (1) in senkrechtem Winkel schneidet,
- bei dem das Schneidelement (1) einen Öffnungswinkel (W) bezogen auf einen Mittelpunkt (M) aufweist,
- wobei das Schneidelement (1) eine Asymmetrie derart aufweist, dass die Werkzeugachse (A) den Öffnungswinkel (W) außermittig schneidet,
- wobei in Draufsicht auf das Schneidelement (1) die Krümmung der Werkzeugschneide (2) eine stetige Radien-änderung aufweist
**dadurch gekennzeichnet , dass** in dem Drehwerkzeug (8) ein Transponder (8) angeordnet ist.

2. Drehwerkzeug mit einem Schneidelement nach Anspruch 1, **dadurch gekennzeichnet, dass** die Krümmung der Werkzeugschneide (2) als Ellipsenabschnitt, als Hyperbelabschnitt oder als Parabelabschnitt ausgebildet ist.

3. Drehwerkzeug mit einem Schneidelement nach Anspruch 1 oder 2, **dadurch gekennzeichnet, dass** die Krümmung der Werkzeugschneide (2) als Funktion zweiter oder höherer Ordnung ausgebildet ist.

4. Drehwerkzeug mit einem Schneidelement nach einem der vorhergehenden Ansprüche, **dadurch gekennzeichnet, dass** die Werkzeugschneide aus einem ersten Material besteht, und dass das erste Material
- ein synthetischer Diamantwerkstoff aus der Gruppe Polykristalliner Diamant (PKD), Chemical Vapor Deposition (CVD), synthetischer monokristalliner Diamant (MKD) und Aggregierte Diamant-Nanostäbchen (ADNR) oder
- polykristallines kubisches Bornitrid (CBN) oder
- ein Naturdiamant (ND) ist.

5. Drehwerkzeug mit einem Schneidelement (1) nach einem der vorhergehenden Ansprüche, **dadurch gekennzeichnet, dass** die Asymmetrie derart ausgebildet ist, dass auf einer ersten Seite (S1) der Werkzeugachse (A) ein längerer Abschnitt (A1) der Werkzeugschneide (2) angeordnet ist als auf der gegenüberliegenden zweiten Seite (S2) der Werkzeugachse (A).

6. Drehwerkzeug mit einem Schneidelement (1) gemäß einem der vorhergehenden Ansprüche, **dadurch gekennzeichnet, dass** die Asymmetrie derart ausgebildet ist, dass das Schneidelement (1) auf einer ersten Seite (S1) der Werkzeugachse (A) spitzer zuläuft als auf der gegenüberliegenden zweiten Seite (S2) der Werkzeugachse (A).

7. Drehwerkzeug mit einem Schneidelement (1) gemäß einem der vorhergehenden Ansprüche, **dadurch gekennzeichnet, dass** sich an den Enden der Werkzeugschneide (2) jeweils eine Seitenfläche (3, 4) anschließt.

8. Drehwerkzeug mit einem Schneidelement (1) gemäß einem der vorhergehenden Ansprüche, **dadurch gekennzeichnet, dass** eine Breite (B) des Schneidelements quer zur Werkzeugachse (A) größer ist als die Tiefe (T) entlang der Werkzeugachse (A), und dass die Breite (B) größer oder gleich 2 Millimeter und kleiner oder gleich 10 Millimeter ist.

9. Drehwerkzeug mit einem Schneidelement (1) gemäß einem der vorhergehenden Ansprüche, **dadurch gekennzeichnet, dass** die Werkzeugschneide (2) positiv mit einem Freiwinkel (FW) größer 0° ausgebildet ist, wobei der Freiwinkel (FW) vorzugsweise zwischen 10° und 25°, weiter bevorzugt zwischen 14° und 21°, und besonders bevorzugt zwischen 17° und 19° beträgt.

10. Drehwerkzeug (9) mit einem Schneidelement (1) gemäß einem der vorhergehenden Ansprüche, **dadurch gekennzeichnet, dass** ein Trägerelement (10) aus einem zweiten Material vorgesehen ist und dass das erste Material eine höhere Härte aufweist als das zweite Material.

11. Drehwerkzeug (9) gemäß Anspruch 10, **dadurch gekennzeichnet, dass** das Trägerelement (10) eine rautenförmige Grundform mit zwei stumpfen (11, 12) und zwei spitzen Ecken (13, 14) aufweist, wobei das Schneidelement (1) an oder auf einer der spitzen Ecken (13) angeordnet ist.

12. Drehwerkzeug (9) nach einem der vorhergehenden Ansprüche, wobei die Trägerachse (TA) und die Werkzeugachse (A) parallel zueinander ausgerichtet sind, **dadurch gekennzeichnet, dass** ein Seitenversatz (X) zwischen Trägerachse (TA) und der Werkzeugachse (A) besteht, der zwischen 0,40 cm und 1,10 cm, bevorzugt zwischen 0,55 cm und 0,90 cm und besonders bevorzugt zwischen 0,60 cm und 0,80 cm beträgt.
